# DEMANDE DE BREVET EUROPEEN

(11) **EP 2 693 334 A1**
(43) Date de publication de la demande: **05.02.2014**
(21) Numéro de dépôt: 13176437.5
(22) Date de dépôt: 15.07.2013
(51) Int. Cl.: G06F 9/44

(54) **Procédé de création d'une application logicielle mis en oeuvre par un moteur générique**

(30) Priorité: 31.07.2012 FR 1257454
(71) Demandeur: Heavenize, 75006 Paris (FR)
(72) Inventeur: Chillan, José, 75006 PARIS (FR)
(74) Mandataire: Delumeau, François Guy

(57) **Abrégé**

Procédé mis en oeuvre par un moteur générique pour créer dynamiquement une application logicielle apte à répondre à un objectif initial (ObjF₀) reçu (E10) par ledit moteur, apte à interroger une base de connaissance (300) comportant au moins un objet informatique comportant au moins un module interprétable et une description d'un résultat obtenu sur interprétation dudit module ;
ledit procédé comportant au moins une itération comportant :
- l'envoi (E40) à ladite base (300), d'une requête construite à partir d'un objectif courant (ObjF), en vue d'obtenir au moins un objet informatique (Oᵢ) tel que l'interprétation (E60) d'un module (n) vise à obtenir au moins un résultat partiel (RPₙ) susceptible de répondre au moins partiellement audit objectif courant (ObjF) ;
- l'obtention (E60) d'au moins un résultat (RPₙ, RObjF) par interprétation d'un module d'un objet informatique reçu ;
- l'obtention d'un résultat partiel compilé (RP) par compilation (E70) d'au moins un desdits résultats partiels obtenus pour déterminer s'ils permettent de constituer un résultat final (RF) répondant à l'objectif initial ;
- si c'est le cas, l'envoi (E80) du résultat final en réponse à l'objectif initial ;
- si ce n'est pas le cas, la définition (E30) d'un nouvel objectif courant défini à partir d'au moins un desdits résultats (RObjF) ou dudit résultat partiel compilé et éventuellement des objectifs courants (ObjF) définis au cours des itérations précédentes, et l'exécution de l'itération suivante ;
l'objectif courant inclus dans la requête envoyée lors de la première itération étant constitué de l'objectif initial, ladite application correspondant aux opérations effectuées par ledit moteur pour y répondre.

## Description

### Arrière-plan de l'invention

La présente invention se situe dans le domaine de la création d'applications logicielles.

D'une façon générale, l'éditeur d'applications logicielles cherche à proposer des applications logicielles susceptibles de répondre à des clients ayant des exigences ou des contraintes variées.

Par conséquent, il s'efforce dans la mesure du possible, lorsqu'il développe une nouvelle application, de s'appuyer sur les développements des applications précédentes.

Corrélativement, les entreprises utilisatrices d'applications logicielles peuvent être intéressées par des applications sur mesure, c'est-à-dire répondant au mieux aux besoins de ses différents métiers.

Il existe donc un besoin de simplifier la création d'applications logicielles afin d'une part de permettre à l'éditeur de rentabiliser ses développements, tout en permettant aux entreprises utilisatrices de personnaliser leurs applications pour répondre à leurs propres besoins.

D'une façon générale, les utilisateurs d'applications logicielles ont du mal à comprendre où est la complexité des outils informatique qu'ils utilisent, ce qui se traduit par une très forte discrépance entre leur perception du coût de leurs demandes et le coût réel d'implémentation dans l'application logicielle. Cet écart est dû au fait qu'un logiciel a pour objet de traduire des besoins humains en un objet informatique exécutable par un processeur. Or le cerveau humain et les processeurs fonctionnent sur des bases et un découpage des problèmes complètement différents. L'application logicielle nécessite un câblage entre les éléments de programmation définis par l'informaticien qui peut être totalement remis en cause par une évolution mineure des spécifications. L'informaticien est un expert de la traduction du mode de pensée humain vers le mode nécessaire à l'exécution d'un programme par un processeur.

De nombreuses technologies ont été créées pour réduire le coût d'implémentation et d'évolutions de logiciels, notamment en prônant la réutilisabilité du code sources, ou la modularité. Le brevet de Siemens DE 102008060440A1 avance sur cette voie en proposant de rechercher et d'adapter automatiquement un code source existant en fonction de besoins pouvant être fonctionnels ou techniques. Dans le même cadre, l'utilisation des technologies orientées objet a permis de reporter dans le temps l'implémentation de certaines fonctionnalités des applications et par là d'augmenter la souplesse des applications.

Cependant, le problème de fond demeure : développer des applications restera complexe tant que la programmation de logiciel sera fondée sur des bases incompréhensibles par les utilisateurs et différents des modes de pensée humains.

Il est donc intéressant de trouver un moyen de rapprocher le mode de pensée requis pour développer une application logicielle du mode de pensée humain, afin pour pouvoir adapter et faire évoluer celle-ci avec un impact mesurable facilement par les utilisateurs et de pouvoir expliquer les détails des traitements à des personnes non expertes.

La présente invention se distingue des approches traditionnelles en ce qu'elle permet de produire des nouvelles applications aptes à remplir des nouvelles exigences dynamiquement sans nécessiter de produire un code source, en réagençant et adaptant dynamiquement les éléments de code source préexistant ainsi que leur enchainement, ces fonctions étant déléguées à un moteur générique prenant en charge cette partie complexe de la programmation.

### Résumé et objectif de l'invention

A cet effet, l'invention concerne un procédé mis en oeuvre par un moteur générique pour créer dynamiquement une application logicielle apte à répondre à un objectif initial reçu par le moteur, le moteur étant apte à interroger une base de connaissance comportant au moins un objet informatique, chaque objet comportant au moins un module interprétable par le moteur et une description d'un résultat obtenu par le moteur sur interprétation du module.

Ce procédé comporte au moins une itération, chaque itération comportant :
- l'envoi à la base de connaissance, d'une requête construite à partir d'un objectif dit courant, en vue d'obtenir au moins un objet informatique tel que l'interprétation d'un module de cet objet par le moteur vise à obtenir au moins un résultat dit partiel susceptible de répondre au moins partiellement à l'objectif courant,
- l'obtention d'au moins un résultat partiel par interprétation d'au moins un module d'un objet informatique reçu au cours de l'itération ;
- l'obtention d'un résultat partiel compilé par compilation d'au moins un des résultats partiels obtenus au cours des itérations pour déterminer s'ils permettent de constituer un résultat dit final répondant à l'objectif initial ;
   - si c'est le cas, l'envoi du résultat final en réponse à l'objectif initial ;
   - si ce n'est pas le cas, la définition d'au moins un nouvel objectif courant défini à partir d'au moins un des résultats ou du résultat partiel compilé et éventuellement des objectifs courants définis au cours des itérations précédentes, et l'exécution de l'itération suivante,
l'objectif inclus dans la requête envoyée au cours de la première itération est constitué de l'objectif initial, et l'application logicielle correspond aux opérations effectuées par le moteur pour répondre à l'objectif initial.

L'interprétation précitée peut consister, s'il existe, à exécuter le code associé à cet objet informatique.

La compilation générant le résultat partiel à partir d'au moins un des résultats partiels obtenus précédemment n'est pas une compilation au sens informatique mais au sens classique d'agrégation et de synthèse de ces résultats.

Corrélativement, l'invention concerne aussi un moteur générique apte à créer dynamiquement une application logicielle apte à répondre à un objectif initial reçu par le moteur, le moteur étant apte à communiquer avec une base de connaissance comportant au moins un objet informatique, chaque objet comportant au moins un module interprétable par le moteur et une description d'un résultat obtenu par le moteur sur interprétation du module.

Ce moteur comporte des moyens de contrôle aptes à mettre en oeuvre, au cours d'au moins une itération :
- des moyens d'envoi à la base de connaissance d'une requête construite à partir d'un objectif dit courant, en vue d'obtenir au moins un objet informatique tel que l'interprétation d'un module de l'objet par le moteur vise à obtenir au moins un résultat dit partiel susceptible de répondre au moins partiellement à l'objectif courant ;
- des moyens d'obtention d'au moins un résultat par interprétation d'au moins un module d'un objet informatique reçu de la base de connaissance au cours de l'itération;
- des moyens d'obtention d'un résultat partiel compilé par compilation d'au moins un des résultats partiels obtenus au cours des itérations pour déterminer s'ils permettent de constituer un résultat dit final répondant à l'objectif initial ;
- des moyens d'envoi du résultat final en réponse à l'objectif initial, ces moyens étant déclenchés par les moyens de contrôle, lorsque le résultat partiel compilé constitue un résultat final et répond à l'objectif initial ;
- les moyens de contrôle étant configurés pour, lorsque le résultat partiel compilé ne constitue pas le résultat final :
   - déclencher des moyens de définition d'au moins un nouvel objectif courant défini à partir d'au moins un des résultats ou du résultat partiel compilé et éventuellement des objectifs courants définis au cours des itérations précédentes ; et
   - exécuter une nouvelle itération ;
l'objectif courant inclus dans la requête envoyée au cours de la première itération étant constitué de l'objectif initial, l'application logicielle correspondant aux opérations effectuées par le moteur pour répondre l'objectif initial.

L'invention concerne également un système de création d'une application logicielle, le système comportant un moteur générique tel que mentionné ci-dessus et une base de connaissance.

Ainsi, et d'une façon générale, l'invention propose un moteur générique apte à créer dynamiquement et automatiquement une application logicielle permettant de répondre à un objectif initial-autrement dit à un besoin particulier-défini - c'est à dire personnalisé - pour une entreprise utilisatrice.

Ce moteur, en ce qu'il est générique, peut être utilisé quel que soit le domaine de l'application logicielle ; ceci permet au développeur du moteur de capitaliser sur ce développement pour de nombreux clients.

Le moteur générique collabore avec une base de connaissance dont le contenu et la grammaire peuvent être définis pour un contexte particulier.

Par exemple, une entreprise utilisatrice de l'invention peut concevoir une base de connaissance propre à cette entreprise et définir, au sein de cette base, des objets informatiques correspondant à différents métiers de cette entreprise.

L'objectif initial peut être émis par un programme comprenant ou non le moteur.

De manière générale, la définition d'un objectif courant par le moteur consiste à créer une question intermédiaire envoyée à la base de connaissance afin d'être au moins partiellement résolue, dans le but de répondre *in fine* à l'objectif initial.

En réponse à cette question intermédiaire, le moteur obtient un résultat qui peut être constitué soit par une nouvelle question intermédiaire, soit par un résultat partiel.

Les résultats partiels sont des réponses ou des éléments de réponses aux questions intermédiaires, obtenus via l'interprétation d'un module d'objet provenant de la base de connaissance.

L'interprétation peut également déclencher l'envoi d'une commande vers un composant tiers, qui à son tour retourne une réponse au moteur (soit un résultat partiel, soit un résultat final, soit une nouvelle question).

Le composant tiers peut contenir des informations mises à jour dans le temps.

L'invention couvre le cas où un même objet est traité plusieurs fois, c'est-à-dire que son ou ses modules sont interprétés plusieurs fois.

La compilation des résultats partiels équivaut à la combinaison des résultats partiels obtenus au cours des itérations, dans le but de répondre à l'objectif initial ou au moins partiellement à une question intermédiaire.

L'étape de compilation peut se faire soit :
- après avoir interprété plusieurs modules,
- après l'interprétation de chaque module.

Dans un mode particulier de réalisation de l'invention, le procédé comporte :
- une étape de création d'un identifiant propre à l'objectif initial sur réception de cet objectif initial,
- une étape de mémorisation de l'identifiant dans une structure de données statique, les objectifs courants avec leurs résultats partiels étant mémorisés en association avec l'identifiant,
- une étape d'interrogation de la structure de données statique pour déterminer si l'objectif courant est enregistré dans la structure de données statique en association avec un résultat partiel valide, et si c'est le cas,
- l'ensemble des étapes d'envoi de la requête à la base de connaissance, de réception d'une liste d'objets sélectionnés par la base de connaissance, et d'obtention d'au moins un résultat est substituée par une étape de lecture de la structure de données statique pour obtenir le résultat partiel.

En variante, on pourrait également enregistrer les autres résultats, à savoir les résultats partiels compilés et les résultats finaux.

De manière générale, un premier intérêt de cette structure de données statique est de garder l'historique de certains traitements effectués par le moteur pour permettre de retracer l'enchaînement des opérations effectuées pour obtenir un résultat final.

Un second intérêt de cette structure de données statique est de permettre au moteur de consulter ultérieurement cette structure de données statique pour éviter de reproduire des opérations (interrogation de la base de connaissance, interprétation d'un module, ...) lorsque le résultat de ces opérations est sauvegardé dans la structure de données statique.

La structure de données statique permet d'optimiser les calculs du moteur en évitant certaines répétitions, l'étape de lecture de la structure de données statique permettant d'économiser le temps relatif aux itérations déjà effectuées pour obtenir le résultat partiel recherché.

Dans ce mode de réalisation, la structure de données statique permet également de réutiliser un résultat obtenu par le procédé pour répondre à un premier objectif initial lors d'une exécution ultérieure du procédé pour répondre à un autre objectif initial.

Dans un mode particulier de réalisation de l'invention, le procédé peut comporter une étape de génération de code source à partir des objets informatiques obtenus de la base de connaissance dans un but d'optimisation du temps d'exécution.

Dans un autre mode de réalisation, le procédé peut lancer l'interprétation d'un premier objet informatique, qui correspond à une branche d'exécution possible, et éventuellement revenir en arrière pour lancer un deuxième si le premier ne satisfait pas certains critères de l'objectif pouvant être techniques ou fonctionnels comme le temps de traitement, l'utilisation de mémoire, ou la précision du résultat.

Dans une autre mode de réalisation, le procédé peut lancer l'interprétation de plusieurs objets informatiques en parallèle et choisir le résultat partiel le plus pertinent par rapport à des critères définis dans l'objectif.

Dans un autre mode de réalisation, le procédé comporte une étape de réinitialisation de la structure de données statique pour empêcher cette réutilisation de résultat.

Dans un mode particulier de réalisation de l'invention, le résultat partiel est valide s'il est enregistré dans la structure de données statique avec une durée de vie non périmée.

Un résultat partiel peut ne pas être pérenne et ainsi fausser l'exactitude du résultat final. La présence dans la structure de données statique de la durée de vie associée à un résultat partiel permet de prévenir ce problème.

Dans un mode particulier de réalisation de l'invention, la base de connaissance comporte une hiérarchie d'informations et retourne au moteur uniquement des objets dont la description contient une information dont l'ordre dans la hiérarchie est compatible avec la requête.

Cette hiérarchie permet de définir un vocabulaire allant du plus général au plus précis, ce vocabulaire étant destiné à être utilisé dans la formulation des objectifs initiaux.

Dans ce mode de réalisation, si l'objectif initial utilise un vocabulaire précis, seuls les objets ayant une description comportant ce vocabulaire précis seront retournés. Au contraire, si l'objectif initial utilise un vocabulaire général, tous les objets ayant une description comportant un vocabulaire général ou plus précis seront retournés.

La base de connaissance peut retourner au moteur des objets ordonnés en fonction de l'ordre des informations contenues dans la description de ces objets et de la requête.

Dans le mode particulier dans lequel les objets reçus en réponse à une requête comportent un numéro d'ordre, le module interprété au cours de l'itération est déterminé en fonction du numéro d'ordre de l'objet auquel il se rapporte.

Le choix de l'objet de la liste qui sera traité par le moteur peut aussi se faire de façon aléatoire.

L'invention concerne également un programme d'ordinateur comportant des instructions pour l'exécution du procédé précité, lorsque le programme est exécuté par un ordinateur.

Ce programme d'ordinateur peut être lié dynamiquement au moteur ou il peut être lié statiquement au moteur.

L'invention comprend également un support d'enregistrement lisible par un ordinateur sur lequel est enregistré un programme d'ordinateur comprenant des instructions pour l'exécution des étapes du procédé précité.

Dans un mode particulier de réalisation de l'invention, l'objectif initial est accompagné par des données d'authentification de l'utilisateur à l'origine de l'objectif initial, ou par des données d'authentification d'une application à l'origine de l'objectif initial, et la base de connaissance retourne au moteur des objets choisis en fonction de ces données d'authentification.

Ces données d'authentification peuvent permettre d'accéder à la structure de données statique telle qu'écrite lors du traitement d'un objectif initial précédent.

### Brève description des figures

D'autres caractéristiques et avantages de la présente invention ressortiront de la description faite ci-dessous, en référence aux figures annexés qui en illustrent des exemples de réalisation dépourvus de tout caractère limitatif. Sur les figures :
- la figure 1 représente sous forme d'organigramme, les principales étapes d'un procédé de création d'application logicielle selon un premier mode de réalisation de l'invention ;
- la figure 2 représente schématiquement un exemple de système de création d'application logicielle selon l'invention ;
- la figure 3 représente sous forme d'organigramme, les principales étapes d'un procédé de création d'une application logicielle selon un second mode de réalisation de l'invention.

### Description détaillée

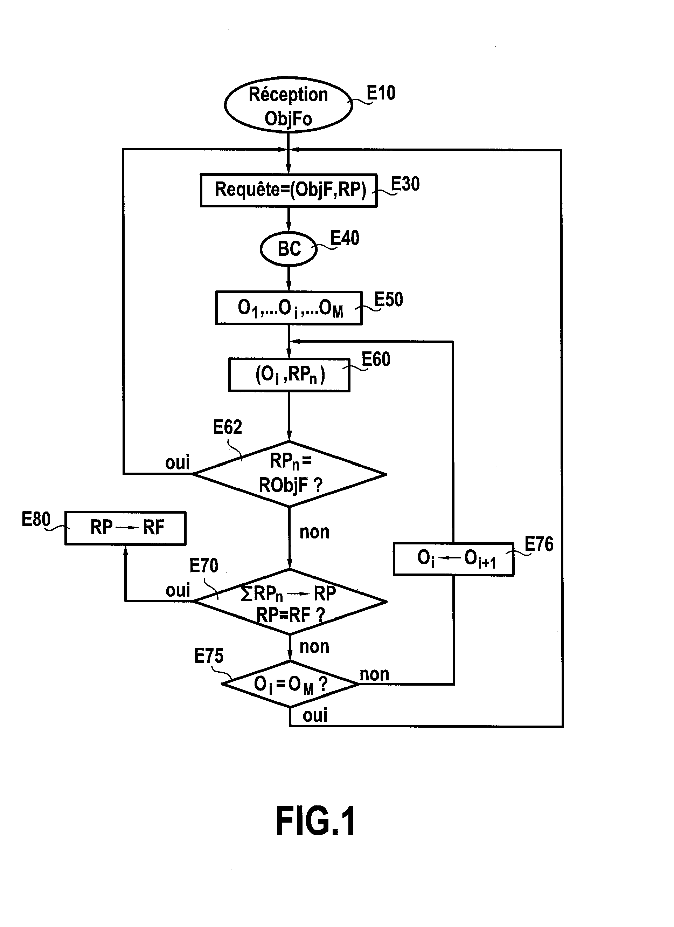

La figure 1 représente sous forme organigramme les principales étapes d'un procédé de création d'application logicielle conforme à un premier mode de réalisation de l'invention. D'une façon générale, ce procédé consiste à créer une application logicielle pour répondre à un objectif initial ObjF₀ reçu par le moteur.

Cet objectif initial ObjF₀ peut contenir une information dite métier. Cette information conditionnera le choix des objets retournés par la base de connaissance.

D'une façon générale, le processus de l'invention s'appuie sur un moteur générique indépendant de ce métier et sur une base de connaissance pouvant contenir des objets propres à ce métier, afin de répondre à l'objectif initial de manière adaptée. Le procédé décrit ci-dessous se place du point de vue du moteur générique.

Le moteur reçoit l'objectif initial ObjF₀ au cours d'une étape E10. Cet objectif initial peut par exemple être envoyé au moteur par une application web ou par une feuille de calcul.

L'étape E30 consiste à formuler une requête comportant un objectif courant (à savoir l'objectif initial pour la première itération) et à définir une variable notée RP.

Au cours d'une étape E40, la requête formulée à l'étape E30 est envoyée à la base de connaissance.

D'une façon générale, la base de connaissance comporte un certain nombre d'objets informatiques, chaque objet comportant une description qui définit, avec une grammaire donnée, les résultats pouvant être obtenus par traitement de cet objet et au moins un module interprétable par le moteur générique pour obtenir ce résultat.

Ainsi, lorsque la base de connaissance 300 reçoit la requête formulée par le moteur générique à l'étape E30 et émise à l'étape E40, celle-ci est apte à déterminer, par analyse de la description des objets, si des objets sont susceptibles de répondre au moins partiellement à cette requête.

Au cours d'une étape E50, le moteur générique reçoit ainsi une liste d'objets O₁ ..., Oᵢ, ..., O_{M} sélectionnés par la base de connaissance, en fonction de leur description, pour répondre au moins partiellement à l'objectif courant de la requête émise à l'étape E40.

Dans un mode préféré de réalisation, les objets reçus par le moteur générique à l'étape E50 sont ordonnés par la base de connaissance 300. Lorsque c'est le cas, le moteur générique commence par interpréter un ou plusieurs modules du premier objet.

L'interprétation du module d'un objet Oᵢ, à l'étape E60, permet d'obtenir un résultat susceptible de répondre au moins partiellement à l'objectif initial.

Ce résultat, noté RPₙ, peut être :
- le résultat permettant de répondre à l'objectif initial, auquel cas ce résultat est dit résultat final et noté RF ;
- un résultat dit partiel, permettant de répondre en partie à l'objectif initial, le résultat final RF étant susceptible d'être obtenu par compilation des résultats partiels RPₙ ; ou
- au moins un nouvel objectif RObjF, cet objectif servant d'objectif courant pour une nouvelle itération du procédé comme décrit ultérieurement en référence à l'étape E62.

On notera que le résultat final RF ou partiel RPₙ mentionné ci-dessus peut par exemple être obtenu directement en interprétant le code de l'objet informatique, l'interprétation du code de l'objet pouvant aussi déclencher l'envoi d'une commande vers un composant tiers, par exemple une base de données ou un serveur web.

L'étape E60 est suivie par un test E62 au cours duquel on vérifie si le résultat RPₙ est un nouvel objectif RObjF. Si tel est le cas, le procédé retourne à l'étape E30 pour une nouvelle itération visant à traiter ce nouvel objectif. Dans les deux autres cas (résultat partiel ou résultat final), le test E62 est suivi par une étape E70 consistant à déterminer si le résultat RPₙ, obtenu au cours de l'itération courante par l'interprétation d'un module du premier objet reçu de la base de connaissance 300, correspond au résultat final RF défini par l'objectif initial reçu par le moteur.

Si tel est le cas, le procédé selon l'invention renvoie le résultat final RF au cours d'une étape E80.

Si ce n'est pas le cas, il convient d'interpréter les modules des autres objets reçus à l'étape E50, tant qu'il en existe, comme représenté en E76 sur la figure 1.

A cet effet, le procédé comporte un test E75 pour vérifier si tous les objets reçus à l'étape E50 ont été traités.

Lorsque le résultat RPₙ obtenu par interprétation du module d'un de ces objets (étape E60) est un résultat partiel, on détermine, à l'étape E70, si les résultats partiels obtenus au cours de cette itération et des itérations précédentes, le cas échéant, permettent de répondre à l'objectif initial. Cette étape E70 consiste à compiler les résultats partiels obtenus au cours de cette itération et des itérations précédentes pour obtenir un résultat dit résultat partiel compilé, et à vérifier si ce résultat partiel compilé correspond au résultat final RF répondant à l'objectif initial. Auquel cas, le résultat partiel compilé est renvoyé à l'étape E80.

Si tous les objets informatiques reçus à l'étape E50 ont été traités, sans qu'il soit possible d'obtenir le résultat final RF escompté à l'étape E70. On cherche à redéfinir un nouvel objectif courant :
- si ce n'est pas possible, le traitement par le moteur s'arrête ;
- si c'est possible, une nouvelle itération est exécutée par retour à l'étape E30, le nouvel objectif courant étant soit un résultat partiel obtenu lors de l'itération en cours, soit un objectif courant défini à partir du résultat partiel compilé.

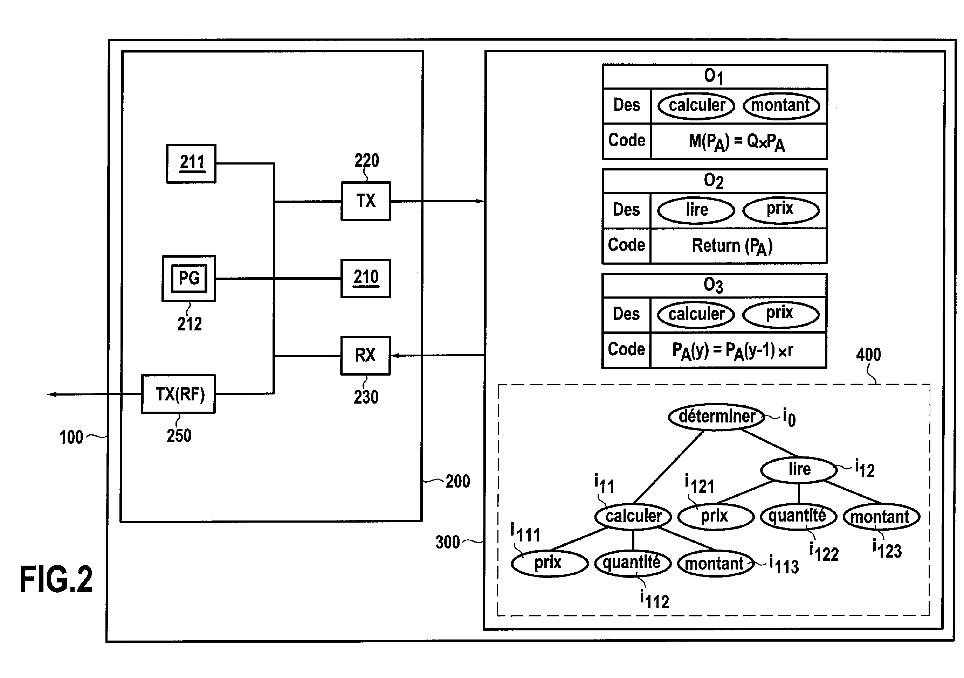

La figure 2 représente un système 100 conforme à l'invention comportant un moteur générique 200 et une base de connaissance 300.

Dans l'exemple de réalisation décrit ici, le moteur générique 200 a l'architecture matérielle d'un ordinateur. Il comporte notamment un processeur 210, une mémoire vive 211 et une mémoire morte 212. Cette mémoire morte 212 constitue un support selon l'invention et mémorise un programme d'ordinateur PG selon l'invention dont l'exécution met en oeuvre les étapes de l'organigramme décrit précédemment en référence à la figure 1.

Le processeur 210, en coopération avec le programme PG et la mémoire vive 211, constitue notamment des moyens de contrôles des itérations du procédé et des moyens pour, au cours de chacune des itérations :
- contrôler des moyens 220 pour envoyer des requêtes à la base de connaissance 300 ;
- interpréter des modules des objets informatiques reçus de la base de connaissance 300, par des moyens de réception 230, en vue d'obtenir des résultats RPn, RObjF ;
- obtenir des résultats partiels compilés RP par compilation de résultats RPn obtenus au cours des différentes itérations ;
- déterminer si ces résultats partiels compilés permettent de constituer un résultat final RF répondant à l'objectif initial ;
- déclencher l'envoi du résultat final, par des moyens 250, en réponse à l'objectif initial lorsque le résultat partiel compilé RP constitue un résultat final RF et répond à l'objectif initial ;
- définir un ou plusieurs nouveaux objectifs courants à partir des résultats RObjF ou dudit résultat partiel compilé RP et éventuellement des objectifs courants ObjF définis au cours des itérations précédentes.

La mémoire vive 211 mémorise les variables nécessaires à l'exécution du programme PG. En particulier, la mémoire vive 211 mémorise les résultats RPₙ (dont les nouveaux objectifs RObjF) et RP, les objectifs courants ObjF définis au cours des différentes itérations du procédé, ainsi que les objets informatiques Oᵢ reçus au cours de ces itérations.

Dans cet exemple, le moteur générique 200 crée dynamiquement une application logicielle et répond à un objectif initial reçu par exemple d'une feuille de calcul.

En particulier, dans l'exemple décrit ici, l'objectif initial est de calculer le montant M d'une facture F, cette facture F comporte la référence d'un article A et une quantité Q de cet article. Ainsi la requête formulée et enregistrée dans la mémoire vive 211 à l'étape E30 par le processeur 210 contient deux tags, à savoir un premier tag « calculer » et un second tag « montant ».

Dans cet exemple, la base de connaissance 300 comporte trois objets O₁, O₂, O₃ et une hiérarchie d'informations sous forme d'un arbre.

Le premier objet O₁ comporte une description DES avec deux tags « calculer » et « montant ».

Le premier tag « calculer » est une information référencée I₁₁. Le deuxième tag « montant » est une information référencée I₁₁₃.

L'objet O₁ comporte également un code permettant de calculer un montant M(P_{A}) à partir d'une quantité Q et du prix P_{A} d'un article A.

L'objet O₂ comporte une description DES comportant deux tags, à savoir un tag « lire » et un deuxième tag « prix ».

Cet objet O₂ comporte également un code dont les instructions permettent de retourner le prix P_{A} d'un article A lu dans une base de données.

Le troisième objet O₃ comporte une description DES avec un tag « calculer » et un tag « prix ».

Cet objet O₃ comporte également un code permettant de calculer un prix P_{A} d'un article A à l'année y en fonction du prix de cet article à l'année précédente (y-1) et d'un taux d'inflation r.

La base de connaissance comporte, dans cet exemple, une hiérarchie 400 sous forme d'un arbre.

Cet arbre comporte un premier niveau i₀ d'une racine comportant le tag « déterminer ».

Cette racine comporte deux fils, respectivement le tag « calculer » (information i₁₁) et « lire » (information i₁₂).

Chacun de ces fils i₁₁ et i₁₂, comportent, dans cet exemple trois fils de niveau 2 à savoir :
- pour le noeud i₁₁, « calculer » : les fils « prix » (i₁₁₁), « quantité » (i₁₁₂) et « montant » (i₁₁₃) ; et
- pour le noeud « lire » : le fils « prix » (i₁₂₁), le fils « quantité » (i₁₂₂), et le fils « montant » (i₁₂₃).

Lorsque la base de connaissance reçoit la requête envoyée à l'étape E40, la base de connaissance 300 recherche les objets dont la description comporte le tag « calculer » et, parmi ceux-ci, les objets dont la description comporte le tag « montant ».

Dans l'exemple décrit ici seul l'objet O₁ répond à ces critères.

Par conséquent, la base de connaissance retourne, au cours d'une étape E50, le seul objet O₁, lequel est reçu par les moyens de réception 230 et mémorisé dans la mémoire vive 211.

Au cours d'une étape E60, le processeur 210 interprète le code de l'objet O₁, ce qui revient, dans cet exemple, à chercher à résoudre l'équation contenue dans le code d'objet O₁.

La quantité Q d'articles est connue de la facture F, par contre le prix P_{A} de l'article A est inconnu. Par conséquent, le résultat RObjF de cette interprétation conduit, dans cette itération à la formulation d'un nouvel objectif, à savoir déterminer le prix P_{A}. Ce résultat, autrement dit ce nouvel objectif, est mémorisé dans la mémoire vive 211.

L'étape E60 est suivie, par une étape E70 de compilation, mise en oeuvre par le processeur 210, et à l'aide de la mémoire vive M susceptible de contenir les différents résultats obtenus au cours des itérations précédentes. Au cours de la première itération, la compilation est sans objet.

L'étape E70 de compilation est suivie par une étape E75 au cours de laquelle le processeur 210 vérifie si d'autres objets reçus de la base de connaissance 300 doivent être traités. En l'occurrence ce n'est pas le cas, puisque seul l'objet O₁ a été renvoyé.

Par conséquent, le processeur fait en sorte que l'étape E75 soit suivie par une étape E30 de formulation d'une nouvelle requête à partir d'un objectif courant qui est de déterminer le prix P_{A}. Au cours de l'étape E30 de la nouvelle itération, une requête est formulée, celle-ci comporte les tags « déterminer » et « prix » ; et une deuxième variable RP est créée.

Cette requête est envoyée à la base de connaissance 300 au cours d'une étape E40, par les moyens d'envoi 220.

Suite à la réception de cette requête, la base de connaissance 300 identifie, à partir de la hiérarchie 400, et du tag « déterminer » que deux objets O₂ et O₃ comportent une description avec les tags « lire » et « calculer » dont l'ordre dans la hiérarchie 400 est inférieur à celui du tag « déterminer ».

Bien entendu, ces deux objets O₂ et O₃ sont éligibles parce que leur description contient le tag « prix ».

Dans cet exemple, l'ordre du tag « lire » dans la hiérarchie 400 est supérieur à l'ordre du tag « calculer ».

Par conséquent, la base de connaissance renvoi les deux objets O₂, O₃ dans cet ordre à l'étape E50, et les moyens 230 reçoivent cette liste ordonnée de deux objets.

Ces objets informatiques sont mémorisés dans la mémoire vive 211.

Le processeur 210 traite, au cours d'une étape E60, l'objet O₂, ce qui consiste à exécuter le code contenu dans cet objet, à savoir lire le prix P_{A} de l'article A de la facture dans une base de données.

L'étape de compilation E70 mise en oeuvre par le processeur 210, consiste à combiner les résultats partiels obtenus au cours de la première et de la deuxième itération, lesquels sont mémorisés dans la mémoire vive M, pour vérifier, si ceux-ci permettent d'obtenir un résultat final au sens de l'invention à savoir un résultat répondant l'objectif initial de calcul du montant M de la facture F.

En l'occurrence, c'est le cas puisque la seule inconnue P_{A} de la formule du code de l'objet O₁ a été retournée par interprétation du code de l'objet O₂.

L'étape E70 est par conséquent suivie par l'étape E80, au cours de laquelle les moyens d'envoi 250 renvoient, en réponse à l'objectif initial, la réponse finale constituée par le montant M(P_{A}) obtenu par multiplication de la quantité Q de la facture F et du prix P_{A} retourné par exécution du code de l'objet O₂.

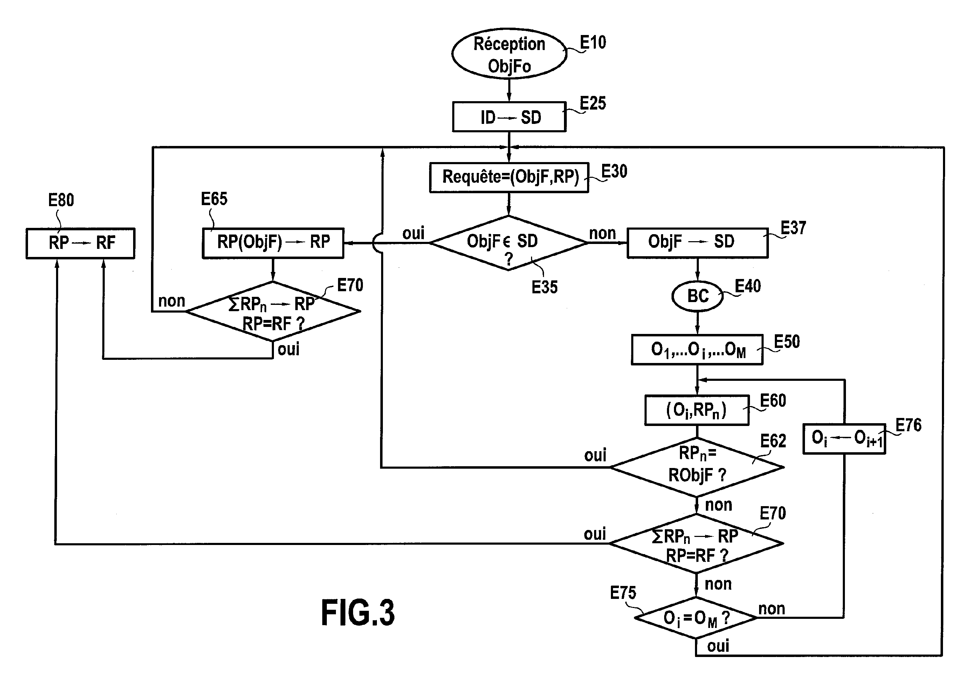

La figure 3 représente le procédé selon l'invention selon un deuxième mode de réalisation. Ce procédé peut être mis en oeuvre par un moteur générique non représenté, dont l'architecture matérielle diffère de celui de la figure 2 en ce qu'elle comporte en outre une structure de données statique SD. Dans ce mode de réalisation, le programme d'ordinateur mémorisé dans la mémoire morte 212 comporte des instructions pour mettre en oeuvre l'organigramme de la figure 3.

Il diffère de celui décrit en référence à la figure 1, en ce qu'il permet de mémoriser les objectifs courants ObjF définis au cours des différentes itérations et les résultats partiels dans la structure de données statique SD, afin de pouvoir réutiliser ces résultats partiels tant que ceux-ci sont pérennes. On évite ainsi de systématiquement réinterpréter les modules des objets Oᵢ de la base de connaissance 300, par exemple si l'utilisateur émet deux objectifs initiaux proches et rapprochés dans le temps. On peut également enregistrer les autres résultats, à savoir les résultats partiels compilés et les résultats finaux.

A cet effet, le procédé comporte, dans ce deuxième mode de réalisation, une étape E25 de création d'un identifiant propre à l'objectif initial et de mémorisation de cet identifiant dans la structure de données, les objectifs courants des résultats partiels RPₙ définis et obtenus au cours des itérations à venir étant mémorisés en association avec cet identifiant.

Dans le mode de réalisation décrit ici, lorsqu'un résultat partiel RPₙ est enregistré dans la structure de données, il est mémorisé en association avec une durée de validité de ces résultats. On rappelle, de retour à la figure 1, que dans le premier mode de réalisation, la base de connaissance 300 était systématiquement interrogée (étape E40), après définition d'une requête (étape E30).

Dans ce deuxième mode de réalisation, lorsqu'un objectif courant ObjF (voire l'objectif initial pour la première itération) est défini à l'étape E30, on vient vérifier, en interrogeant la structure de données statique, si un résultat RPₙ, dont la durée de vie n'est pas périmée, est associé dans la structure de données statique en relation avec cet objectif courant.

Il faut vérifier deux choses, à savoir que la date n'est pas périmée et que le résultat répond effectivement à l'objectif courant.

Si un résultat RPₙ valide et non périmé est effectivement associé dans la base de données avec l'objectif courant, il n'est pas nécessaire d'interroger (E40) la base de connaissance 300, le résultat RPₙ mémorisé pouvant directement être réutilisé au cours d'une étape E65.

En revanche, si la structure de données ne comporte pas de résultat RPₙ valide et non périmé en association avec l'objectif courant défini à l'étape E30, le moteur générique inscrit à l'étape E37 l'objectif courant dans la structure de données statique SD puis envoie la requête à la base de connaissance 300. L'ensemble des étapes suivantes est conforme au mode premier mode de réalisation décrit à la figure 1.

On notera que comme dans le premier mode de réalisation, les différents résultats et objectifs sont mémorisés dans la mémoire vive 211.

## Revendications

1. Procédé mis en oeuvre par un moteur générique pour créer dynamiquement une application logicielle apte à répondre à un objectif initial (ObjF₀) reçu (E10) par ledit moteur, ledit moteur étant apte à interroger une base de connaissance (300) comportant au moins un objet informatique, chaque objet comportant au moins un module interprétable par ledit moteur et une description d'un résultat obtenu par ledit moteur sur interprétation dudit module ;
ledit procédé comportant au moins une itération (E30∼E75), chaque itération comportant :
- l'envoi (E40) à ladite base de connaissance (300) , d'une requête construite à partir d'un objectif (ObjF) dit courant, en vue d'obtenir au moins un objet informatique (Oᵢ) tel que l'interprétation (E60) d'un module (n) dudit objet par le moteur vise à obtenir au moins un résultat dit partiel (RPₙ) susceptible de répondre au moins partiellement audit objectif courant (ObjF) ;
- l'obtention (E60) d'au moins un résultat (RPₙ, RObjF) par interprétation d'au moins un module d'un objet informatique reçu au cours de ladite itération ;
- l'obtention d'un résultat partiel compilé (RP) par compilation (E70) d'au moins un desdits résultats partiels (RPₙ) obtenus au cours desdites itérations pour déterminer s'ils permettent de constituer un résultat dit final (RF) répondant à l'objectif initial (ObjF₀) ;
- si c'est le cas, l'envoi (E80) du résultat final (RF) en réponse à l'objectif initial (ObjF₀) ;
- si ce n'est pas le cas, la définition (E30) d'au moins un nouvel objectif courant défini à partir d'au moins un desdits résultats (RObjF) ou dudit résultat partiel compilé (RP) et éventuellement des objectifs courants (ObjF) définis au cours des itérations précédentes, et l'exécution de l'itération suivante ;
l'objectif courant inclus (E30) dans la requête envoyée au cours de la première dite itération étant constitué de l'objectif initial (ObjF₀), ladite application logicielle correspondant aux opérations effectuées par ledit moteur pour répondre audit objectif initial.

2. Procédé selon la revendication 1, **caractérisé en ce qu'il** comporte :
- une étape (E25) de création d'un identifiant propre à l'objectif initial (ObjF₀) sur réception dudit objectif initial ;
- une étape (E25) de mémorisation de l'identifiant dans une structure de données statique (SD), lesdits objectifs courants avec leurs résultats partiels étant mémorisés en association avec l'identifiant ;
- une étape (E35) d'interrogation de ladite structure de données statique (SD) pour déterminer si l'objectif courant (ObjF) est enregistré dans la structure de données statique (SD) en association avec un résultat partiel valide ; et si c'est le cas :
- lesdites étapes d'envoi (E40) de la requête à la base de connaissance 300, de réception (E50) d'une liste d'objets sélectionnés par la base de connaissance 300, et d'obtention (E60) d'au moins un résultat sont substituées par une étape (E65) de lecture de ladite structure de données statique (SD) pour obtenir le résultat partiel.

3. Procédé selon la revendication 2, **caractérisé en ce que** ledit résultat partiel est valide s'il est enregistré dans la structure de données statique (SD) avec une durée de vie non périmée.

4. Procédé selon l'une quelconque des revendications 1 à 3, **caractérisé en ce que** lesdits objets reçus (E50) en réponse à une dite requête comportent un numéro d'ordre, ledit au moins un module interprété au cours de ladite itération étant déterminé en fonction du numéro d'ordre de l'objet auquel il se rapporte.

5. Procédé selon l'une quelconque des revendications 1 à 4, **caractérisé en ce que** l'interprétation (E60) du module déclenche l'envoi d'une commande vers un composant tiers, la réponse à ladite commande étant utilisée pour l'obtention dudit résultat.

6. Programme d'ordinateur (PG) comportant des instructions pour l'exécution du procédé de création d'une application logicielle selon l'une quelconque des revendications 1 à 5, lorsque ledit programme est exécuté par un ordinateur.

7. Support d'enregistrement (212) lisible par un ordinateur sur lequel est enregistré un programme d'ordinateur (PG) comprenant des instructions pour l'exécution des étapes du procédé création d'une application logicielle selon l'une quelconque des revendications 1 à 6.

8. Moteur générique (200) apte à créer dynamiquement une application logicielle apte à répondre à un objectif initial reçu par ledit moteur, ledit moteur étant apte à communiquer avec une base de connaissance (300) comportant au moins un objet informatique, chaque objet comportant au moins un module interprétable par ledit moteur et une description d'un résultat obtenu par ledit moteur sur interprétation dudit module, ledit moteur comportant des moyens (210) de contrôle aptes à mettre en oeuvre, au cours d'au moins une itération :
- des moyens (220) d'envoi à ladite base de connaissance (300) d'une requête construite à partir d'un objectif (ObjF) dit courant, en vue d'obtenir au moins un objet informatique (Oᵢ) tel que l'interprétation d'un module (n) dudit objet par le moteur vise à obtenir au moins un résultat dit partiel (RPₙ) susceptible de répondre au moins partiellement audit objectif courant ;
- des moyens (210) d'obtention d'au moins un résultat (RPₙ, RObjF) par interprétation d'au moins un module d'un objet informatique reçu de la base de connaissance (300) au cours de ladite itération ;
- des moyens (210) d'obtention d'un résultat partiel compilé (RP) par compilation d'au moins un desdits résultats (RPₙ) obtenus au cours desdites itérations pour déterminer s'ils permettent de constituer un résultat dit final (RF) répondant à l'objectif initial ;
- des moyens (250) d'envoi du résultat final (RF) en réponse à l'objectif initial, ces moyens étant déclenchés par lesdits moyens (210) de contrôle, lorsque ledit résultat partiel compilé (RP) constitue un résultat final (RF) et répond à l'objectif initial ;
- lesdits moyens (210) de contrôle étant configurés pour, lorsque ledit résultat partiel compilé ne constitue pas ledit résultat final (RF) :
- déclencher des moyens (210) de définition d'au moins un nouvel objectif courant défini à partir d'au moins un desdits résultats (RObjF) ou dudit résultat partiel compilé (RP) et éventuellement des objectifs courants (ObjF) définis au cours des itérations précédentes ; et
- exécuter une nouvelle itération ;
l'objectif courant inclus dans la requête envoyée au cours de la première itération étant constitué de l'objectif initial (ObjF₀), ladite application logicielle correspondant aux opérations effectuées par ledit moteur pour répondre audit objectif initial.

9. Système (100) de création d'une application logicielle, ledit système comportant :
- un moteur générique (200) selon la revendication 8 ;
- une base de connaissance (300).

10. Système (100) selon la revendication 9, **caractérisé en ce que** la base de connaissance (300) comporte une hiérarchie (400) d'informations, et **en ce que** ladite base de connaissance (300) retourne au moteur uniquement des objets dont la description contient une information dont la place dans la hiérarchie (400) est compatible avec la requête.

11. Système (100) selon l'une quelconque des revendications 9 à 10, dans lequel l'objectif initial est accompagné par des données d'authentification de l'utilisateur à l'origine de l'objectif initial, ou par des données d'authentification d'une application à l'origine de l'objectif initial, et dans lequel ladite base de connaissance (300) retourne au moteur (200) des objets choisis en fonction de ces données d'authentification.
